# EUROPÄISCHE PATENTANMELDUNG

(11) **EP 1 126 741 A1**
(43) Veröffentlichungstag der Anmeldung: **22.08.2001**
(21) Anmeldenummer: 00103082.4
(22) Anmeldetag: 15.02.2000
(51) Int. Cl.: H04Q 11/04

(54) **Verfahren zum Ersatzschalten von Übertragungseinrichtungen in MPLS-Netzen**

(71) Anmelder: SIEMENS AKTIENGESELLSCHAFT, 80333 München (DE)
(72) Erfinder: Klink, Joachim, Dipl.-Ing., 81377 München (DE)

(57) **Zusammenfassung**

Die Ersatzschaltung von MPLS-Pakete birgt beim Stand der Technik das Problem von Fehlschaltungen in sich. Das erfindungsgemäße Verfahren schafft hier Abhilfe, indem bei Störung einer Betriebsstrecke nach Maßgabe von Prioritätskriterien und logischer Verbindungsinformation eine Ersatzschaltung auf lediglich eine Ersatzstrecke gesteuert wird.

## Beschreibung

Die Erfindung betrifft ein Verfahren gemäß dem Oberbegriff des Patentanspruchs 1.

Ein Verfahren zum Ersatzschalten von Übertragungseinrichtungen ist bereits aus der deutschen Patentschrift DE 196 46 016 C2 bekannt.

Dieses bekannte Verfahren bezieht sich auf Übertragungseinrichtungen, über die Informationen nach einem asynchronen Transfermodus (ATM) geleitet werden. Hierbei ist eine Übertragungseinrichtung zur bidirektionalen Übertragung von Digitalsignalen vorgesehen, bei der zwei als Endstellen fungierende Vermittlungseinrichtungen über eine Betriebsstrecke und eine Ersatzstrecke miteinander verbunden sind. Die beiden Endstellen enthalten jeweils eine Überwachungsvorrichtung zur Feststellung von Übertragungsstörungen. Eine durch die Überwachungsvorrichtung steuerbare Schaltvorrichtung verbindet eine Empfangsvorrichtung in einen ersten Schaltzustand mit der Betriebsstrecke und in einem zweiten Schaltzustand mit der Ersatzstrecke.

Nachteilig an diesem bekannten Verfahren ist, daß es sich ausschließlich auf ATM-Übertragungseinrichtungen bezieht. Im Internet werden Informationen über eine Mehrzahl von Netzknoten, die als Router ausgebildet sein können, dem empfangenden Teilnehmer zugeführt. Zwischen den Routern können MPLS-Netze angeordnet sein. MPLS-Netze sind aber in dem bekannten Verfahren nicht angesprochen.

Der Erfindung liegt die Aufgabe zugrunde, ein Verfahren der eingangs genannten Art derart weiterzubilden, daß auch im Internet Informationen mit großer Sicherheit über eine Mehrzahl von Netzknoten übertragen werden können.

Die Erfindung wird ausgehend von den im Oberbegriff des Patentanspruchs 1 angegebenen Merkmale durch dessen kennzeichnende Merkmale gelöst.

Vorteilhaft an der Erfindung ist insbesondere, daß die MPLS-Pakete zusätzlich über die Ersatzstrecke geleitet werden, und daß im Störungsfall auf der Betriebsstrecke die über die Ersatzstrecke zwischen den beiden Vermittlungseinrichtungen geleiteten MPLS-Pakete nach Maßgabe von Prioritätskriterien, mittels derer beim gleichzeitigen Auftreten mehrerer Ersatzschaltanforderungen festgelegt ist, welches Kriterium höchste Priorität hat, aufgenommen und von im Paketkopf der MPLS-Pakete enthaltenen logischen Verbindungsinformationen übertragen und den weiteren Einrichtungen des MPLS-Netzes zugeführt werden. Damit ist der Vorteil verbunden, daß die Verbindung im Fehlerfall aufrechterhalten werden kann. Das Vorsehen einer oder mehrerer Paketköpfe, die dem IP-Paket im MPLS-Netz hinzugefügt sind, bildet hierbei keine Einschränkung.

Vorteilhafte Weiterbildungen der Erfindung sind in den Unteransprüchen anggegeben.

Die Erfindung wird im folgenden anhand eines Ausführungsbeispiels näher erläutert.

Es zeigen:
- Figur 1: ein in das Internet eingebundenes MPLS-Netz,
- Figur 2: das erfindungsgemäße Verfahren zur Übertragung von MPLS-Paketen in einer 1+1-Struktur,
- Figur 3: die verwendeten Prioritäten, nach deren Maßgabe die Ersatzschaltung erfolgt.

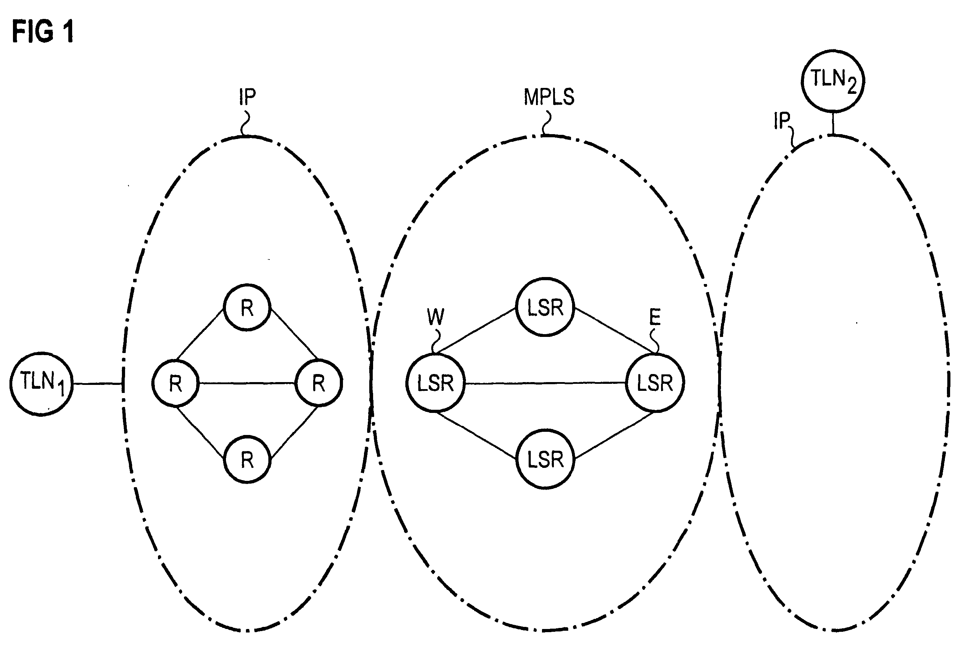

In Fig. 1 ist beispielhaft aufgezeigt, wie Informationen ausgehend von einem Teilnehmer TLN1 einem Teilnehmer TLN2 zugeführt werden. Der sendende Teilnehmer TLN1 ist dabei an das Internet-Netz IP angeschlossen, durch das die Informationen nach einem Internetprotokoll wie z.B. das IP-Protokoll geleitet werden. Dieses Protokoll ist kein verbindungsorientiertes Protokoll. Das Internet-Netz IP weist eine Mehrzahl von Routern R auf, die untereinander vermascht sein können. Der empfangende Teilnehmer TLN2 ist an ein weiteres Internet-Netz IP angeschlossen. Zwischen den beiden Internet-Netzen IP ist ein MPLS-Netz (Multiprotocol Packet Label Switching) eingefügt, durch das Informationen in Form von MPLS-Paketen verbindungsorientiert durchgeschaltet werden. Dieses Netz weist eine Mehrzahl von miteinander vermaschten Routern auf. In einem MPLS-Netz können dies sogenannte Label Switched Router (LSR) sein. Einer der Router ist als sendende Einrichtung W und ein weiterer als empfangende Einrichtung E bezeichnet.

MPLS-Pakete weisen jeweils einen Kopfteil sowie einen Informationsteil auf. Der Kopfteil dient der Aufnahme von Verbindungsinformation während der Informationsteil der Aufnahme von Nutzinformation dienlich ist. Als Nutzinformation werden IP-Pakete verwendet. Die im Kopfteil enthaltene Verbindungsinformation ist als MPLS-Verbindungsnummer ausgebildet. Diese hat aber lediglich im MPLS-Netz Gültigkeit. Wenn somit ein IP-Paket vom Internet-Netz IP in das MPLS-Netz eindringt, wird diesem der im MPLS-Netz gültige Kopfteil angehängt. Darin sind alle Verbindungsinformationen enthalten, die den Weg des MPLS-Paketes im MPLS-Netz vorgeben. Verläßt das MPLS-Paket das MPLS-Netz, wird der Kopfteil wieder entfernt und das IP-Paket im sich daran anschließenden Internet-Netz IP nach Maßgabe des IP-Protokolls weitergeroutet.

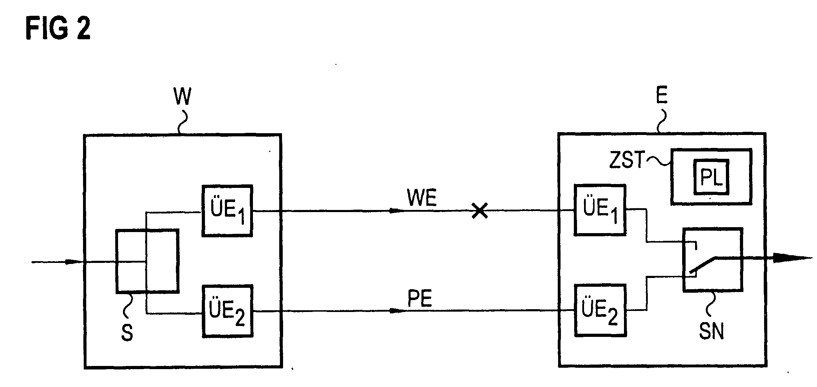

In Fig. 2 ist die Struktur des MPLS-Netzes näher aufgezeigt. Beispielhaft sind hier zwei Knoten eines MPLS-Netzes offenbart. Hierbei handelt es sich um eine unidirektionale 1+1 Struktur. Beide Knoten stellen Vermittlungseinrichtung dar, und sind als Router (Label Switched Router, LSR) W, E ausgebildet. In vorliegendem Ausführungsbeispiel wird davon ausgegangen, daß es sich bei diesen Routern um MPLS Cross Connect Vermittlungseinrichtungen handelt. Die Verwendung derart ausgebildeter Router bedeutet jedoch keine Einschränkung der Erfindung, andere Vermittlungseinrichtungen wie z. B. ATM-Vermittlungseinrichtungen sind ebenso verwendbar. In Fig. 2 sollen nun MPLS-Pakete (Multiprotocol Label Switched Packets) von dem Label Switched Router W zu dem Label Switched Router E hin übertragen werden. Eine Rückrichtung ist bei MPLS-Netzen definitionsgemäß nicht vorgesehen.

Die Label Switched Router W, E sind über eine Betriebsstrecke WE (WORKING ENTITY) sowie eine Ersatzstrecke PE (PROTECTION ENTITY) miteinander verbunden. Sendeseitig ist eine Schalteinrichtung S (BRIDGE) aufgezeigt, über die im Label Switched Router W eintreffende MPLS-Pakete dupliziert und sowohl über die zugehörige Betriebsstrecke WE als auch die Ersatzstrecke PE zum Label Switched Router E hin übertragen werden. Die Ersatzstrecke PE dient somit als Ersatzpfad für die über die Betriebsstrecke WE geführten MPLS-Pakete. Das Einrichten des Ersatzpfades ist optional.

Weiterhin ist im empfangenden Label Switched Router E eine Selektionseinrichtung SN offenbart, deren Aufgabe darin besteht, die über die Betriebsstrecke WE übertragenen MPLS-Pakete dem Ausgang des Label Switched Routers E zuzuführen. Weiterhin sind hier Überwachungsvorrichtungen ÜE₀, ÜE₁ (PROTECTION DOMAIN SINK, PROTECTION DOMAIN SOURCE) aufgezeigt, die den Zustand bzw. die Qualität der über die Betriebstrecke WE sowie die Ersatzstrecke PE geführten MPLS-Pakete überwachen. Die Überwachungsvorrichtungen ÜE₀, ÜE₁ sind ebenso sendeseitig im Label Switched Router W angeordnet. Beispielsweise können MPLS-Pakete bevor sie über die Betriebsstrecke WE zum Label Switched Router E hin übertragen werden, in der Überwachungseinrichtung ÜE₁ des Label Switched Routers W mit Steuerinformationen beaufschlagt werden. Diese mitgeführten Steuerinformationen werden dann empfangsseitig von der Überwachungseinrichtung ÜE₁ des empfangenden Label Switched Routers E entnommen und überprüft. Anhand dieser Steuerinformationen kann dann z. B. ermittelt werden, ob die Übertragung des MPLS-Paketes korrekt erfolgt ist oder nicht. Insbesondere kann hier ein möglicher Totalausfall (SIGNAL FAIL FOR WORKING ENTITY) der Betriebsstrecke WE ermittelt werden. Ebenso sind aber auch unter Verwendung bekannter Verfahren Verschlechterungen in der Übertragungsqualität (SIGNAL DEGRADE) ermittelbar. Die Überwachungsvorrichtungen ÜE₀, ÜE₁ schließen die Betriebsstrecke WE und Ersatzstrecke PE auf beiden Seiten ab. Die Ersatzstrecke PE soll im Fehlerfall als Übertragungsstrecke für die außer Betrieb genommene Betriebsstrecke WE dienen.

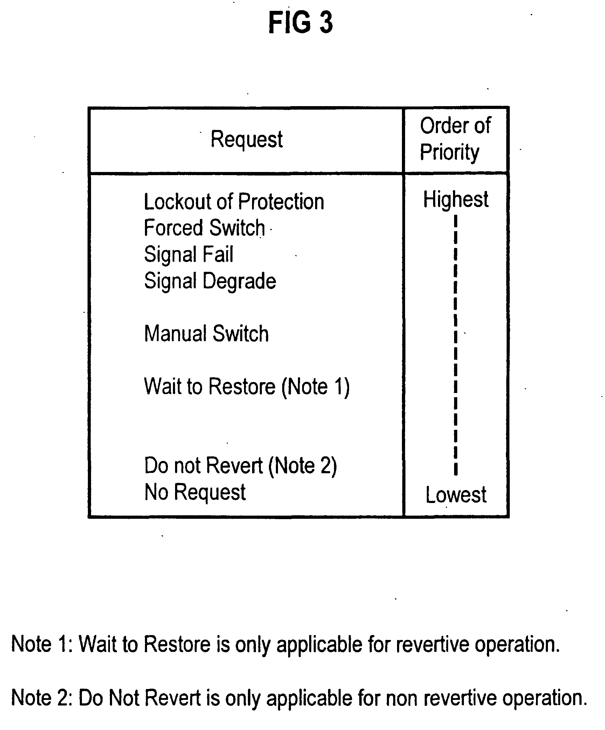

In jedem Label Switched Router W, E sind ferner zentrale Steuereinrichtungen ZST angeordnet. Diese beinhalten jeweils Prioritätstabellen PL. Hierbei handelt es sich um lokale Prioritätstabellen, in denen Zustand und Priorität des lokalen Label Switched Routers abgespeichert ist. Durch die Einführung der Prioritäten wird erreicht, daß beim gleichzeitigen Auftreten mehrerer Ersatzschalteanforderungen festgelegt ist, welche Ersatzschalteanforderung priorisiert zu verwenden ist. So besteht beispielsweise eine hochpriore Anforderung von einem Anwender. Da dieser Ersatzschalteanforderung eine hohe Priorität zugewiesen ist, wird sie somit bevorzugt gesteuert. Eine anderen niederpriore Ersatzschalteanforderung wird somit zurückgewiesen. Die einzelnen Prioritäten sind tabellarisch in Fig. 3 aufgezeigt.

Im folgenden wird nun die Durchführung des erfindungsgemäßen Verfahrens näher erläutert. Bei der Konfiguration gemäß Fig. 2 wird zunächst davon ausgegangen, daß jede MPLS-Verbindung individuell überwacht und individuell ersatzgeschaltet wird. Ausfälle und Störungen können daher verbindungsindividuell berücksichtigt werden. Die MPLS-Pakete werden vom Label Switched Router W zum Label Switched Router E hin über die Betriebsstrecke WE sowie die Ersatzstrecke PE übertragen. Zunächst ist die Betriebstrecke WE noch intakt und die MPLS-Pakete werden darüber korrekt dem empfangenden Label Switched Router E zugeführt. Die MPLS-Pakete gehören einer oder mehreren Verbindungen an, die physikalisch über die gleiche Betriebsstrecke WE geführt werden und die jeweils einen Ersatzpfad (optional) über die Ersatzstrecke PE aufweisen können. Die einzelnen Verbindungen werden anhand der im Kopfteil der MPLS-Pakete eingetragenen logischen MPLS-Verbindungsnummer unterschieden.

Die Schaltvorrichtung S des Label Switched Routers W dupliziert die eintreffenden MPLS-Pakete und übergibt sie den Überwachungseinrichtungen ÜE₀, ÜE₁. Hier werden die MPLS-Pakete mit den bereits angesprochenen Steuerinformationen beaufschlagt und über die Betriebsstrecke WE sowie die Ersatzstrecke PE dem empfangenden Label Switched Router E zugeführt. Eingangsseitig sind dort die Überwachungseinrichtungen ÜE₀, ÜE₁ angeordnet. Die mitgeführte Steuerinformation wird nun überprüft, woraufhin gegebenenfalls ein Fehlerfall ermittelt wird. Ist die Übertragung korrekt erfolgt, werden die MPLS-Pakete einem Koppelfeld SN zugeführt.

Im folgenden wird nun davon ausgegangen, daß die Betriebsstrecke WE ausgefallen ist. Dies wird von der Überwachungseinrichtung ÜE₁ des empfangenden Label Switched Routers E ermittelt. Eine zu diesem Zweck generierte Ersatzschalteanforderung wird nun zur betreffenden zentralen Steuereinrichtung ZST des empfangenden Label Switched Routers E übermittelt, und dort in der hier geführten lokalen Prioritätstabelle PL abgelegt.

Nach Maßgabe der in der lokalen Prioritätstabelle PL abgespeicherten Prioritäten wird nun ermittelt, ob noch höher priore Anforderungen anstehen. Dies könnte beispielsweise die bereits angesprochene Umschalteanforderung des Anwenders (FORCED SWITCH) sein. Die in der lokalen Prioritätstabelle PL gespeicherten Prioritäten sind in Fig. 3 aufgezeigt. Sind keine höher priorisierte Anforderungen vorhanden, wird die Schaltvorrichtung SN des Label Switched Routers E in den verbleibenden Betriebszustand gesteuert, wie in Figur 1 aufgezeigt. Die über die Ersatzstrecke PE geleiteten MPLS-Pakete werden aufgenommen und dem Koppelfeld SN zugeführt, die Betriebsstrecke WE wird außer Betrieb genommen.

Bislang wurde davon ausgegangen, daß jede MPLS-Verbindung individuell überwacht und ersatzgeschaltet wird. Ausfälle und Störungen können daher verbindungsindividuell derart berücksichtigt werden, indem bei Ausfall oder Verschlechterung der Übertragungsqualität einer einzelnen Verbindung diese ersatzgeschaltet werden kann.

In praktischen Ausführungen von Übertragungseinrichtungen dieser Art werden jedoch häufig viele Einzelverbindungen über den gleichen physikalischen Weg (z. B. eine Glasfaser) zwischen Übertragungseinrichtungen geführt. Im Falle einer Unterbrechung dieses Weges (z. B. Glasfaserbruch) sind dann alle Einzelverbindungen durch einen einzigen Ausfall betroffen. Ausfälle dieser Art überwiegen in der Praxis gegenüber Ausfällen, die nur Einzelverbindungen betreffen. Insbesondere müßten in diesem Fall für jede unterbrochene Einzelverbindung ein Ersatzschalteprotokoll in der Prioritätstabelle PL eingetragen werden.

In einer Ausgestaltung der Erfindung wird daher vorgesehen, mittels einer Gruppenersatzschaltung eine Vielzahl von Einzelverbindungen gemeinsam ersatzzuschalten.

Hierzu werden alle über denselben physikalischen Pfad geführten MPLS-Verbindungen logisch zu einer Gruppe zusammengefaßt. Ferner werden für diese Gruppe 2 Ersatzschalteverbindungen erstellt. Die erste dieser Ersatzschalteverbindungen wird über die Betriebsstrecke WE geleitet (MPLS-Ersatzschalte-LSP; LSP= Label Switched Path), womit sie über den gleichen physikalischen Weg zwischen den Label Switched Routern W und E geführt ist, wie alle zugehörigen Einzelverbindungen.Die zweite dieser Ersatzschalteverbindungen wird über die Ersatzstrecke PE eingerichtet.

Im Gruppenersatzschalteverfahren werden nun nur noch diese beiden Ersatzschalteverbindungen auf Ausfälle und Störungen in den Überwachungseinrichtungen ÜE₁, ÜE₀ überwacht. Die Einzelverbindungen werden nicht mehr überwacht. Im Falle einer Ersatzschalteanforderung wird die prioritätsgesteuerte Ersatzschalteentscheidung wie bisher in der Prioritätslogik PL getroffen. Im Ersatzschaltefall werden allerdings alle zu einer Gruppe zugehörigen Einzelverbindungen gemeinsam durch die Schaltvorrichtung SN umgeschaltet.

Vorteilhaft daran ist, dass eine Vielzahl von Einzelverbindungen durch eine einzige Ersatzschalteverbindung überwacht und ersatzgeschaltet werden können, um somit auf die im praktischen Betrieb am häufigsten vorkommenden Fehlerfälle angemessen reagieren zu können. Ferner wird lediglich ein Ersatzschalteprotokoll in der Prioritätstabelle PL eingetragen.

Die Betriebs- und Ersatzstrecken WE und PE müssen vor Inbetriebnahme eingerichtet werden. Dazu müssen Verbindungen zwischen den Label Switched Routern W und E, sowie gegebenenfalls an dazwischenliegenden (in Figur 3 nicht dargestellten) Übertragungseinrichtungen eingerichtet (konfiguriert) werden.

Das Einrichten dieser Verbindungen erfolgt üblicherweise per TMN (Telekommunikations-Netzmanagement), kann aber auch mittels eines MPLS-Signalisierungsprotokolles erfolgen. Hierzu wird dabei per Signalisierung der Weg der Betriebs- bzw. Ersatzstrecke festgelegt. Zusätzlich wird über das Signalisierungsprotokoll Bandbreite in den Übertragungseinrichtungen reserviert, damit die Übertragung der Informationen über die Betriebs- bzw. Ersatzstrecke sichergestellt ist.

## Patentansprüche

1. Verfahren zum Ersatzschalten von Übertragungseinrichtungen in MPLS-Netzen, mit
zwei Vermittlungseinrichtungen (W, E) die jeweils einen aus einer Betriebsstrecke (WE) und einer Ersatzstrecke (PE) gebildeten Übertragungsabschnitt abschließen, wobei in den Übertragungsabschnitt weitere Vermittlungseinrichtungen angeordnet sein können, und wobei eine der Vermittlungseinrichtungen (W) Informationen in MPLS-Paketen der verbleibenden Vermittlungseinrichtung (E) über den Übertragungsabschnitt zuführt, und wobei Überwachungseinrichtungen (ÜE₀, ÜE₁) vorgesehen sind, die jeweils am Ende des Übertragungsabschnittes angeordnet sind und von denen eine Störung auf dem Übertragungsabschnitt ermittelt werden,
**dadurch gekennzeichnet,**
daß die MPLS-Pakete zusätzlich über die Ersatzstrecke (PE) geleitet werden,
daß im Störungsfall auf der Betriebsstrecke (WE) die über die Ersatzstrecke (PE) zwischen den beiden Vermittlungseinrichtungen (W, E) geleiteten MPLS-Pakete nach Maßgabe von Prioritätskriterien, mittels derer beim gleichzeitigen Auftreten mehrerer Ersatzschaltanforderungen festgelegt ist, welches Kriterium höchste Priorität hat,aufgenommen und von im Paketkopf der MPLS-Pakete enthaltenen logischen Verbindungsinformationen übertragen und weiteren Einrichtungen des MPLS-Netzes zugeführt werden.

2. Verfahren nach Anspruch 1,
**dadurch gekennzeichnet,**
daß im Ersatzschaltefall eine Ersatzschalteanforderung generiert wird, der weitere Prioritäten zugewiesen werden.

3. Verfahren nach Anspruch 1, 2,
**dadurch gekennzeichnet,**
daß die logische Verbindungsinformation die Nummer der MPLS-Verbindung (Label Value) ist.

4. Verfahren nach Anspruch 1 bis 3,
**dadurch gekennzeichnet,**
daß die Ersatzschalteanforderung pro ausgefallener MPLS-Verbindung in Prioritätstabellen (PL) gespeichert werden.

5. Verfahren nach einem der Ansprüche 1 bis 4,
**dadurch gekennzeichnet,**
daß die Ersatzschaltung durch Ansteuern einer in der empfangenden Vermittlungseinrichtung angeordneten Selektionseinrichtung (SN) erfolgt.

6. Verfahren nach einem der vorstehenden Ansprüche,
**dadurch gekennzeichnet,**
daß Totalaufall und Verschlechterung einer Betriebsstrecke in der Überwachungseinrichtung der empfangenden Vermittlungseinrichtung ermittelt werden.

7. Verfahren nach einem der vorstehenden Ansprüche,
**dadurch gekennzeichnet,**
daß eine Gruppenersatzschaltung vorgesehen wird, indem alle über denselben physikalischen Pfad geführten MPLS-Verbindungen logisch zu einer Gruppe zusammengefaßt werden, und für die derart geformte Gruppe zwei Ersatzschalteverbindungen erstellt werden, wobei die erste dieser Ersatzschalteverbindungen über die Betriebsstrecke (WE) und die zweite dieser Ersatzschalteverbindungen über die Ersatzstrecke (PE) eingerichtet wird.

8. Verfahren nach einem der vorstehenden Ansprüche,
**dadurch gekennzeichnet,**
daß im Falle des Vorsehens einer Gruppenersatzschaltung von den Überwachungseinrichtungen (ÜE₀, ÜE₁) lediglich die beiden Ersatzschalteverbindungen überwacht werden.

9. Verfahren nach einem der vorstehenden Ansprüche,
**dadurch gekennzeichnet,**
daß das Einrichten der über die Betriebsstrecke (WE) sowie die Ersatzstrecke geführten Verbindungen durch ein MPLS Signalisierungsprotokoll erfolgt, das Bandbreite in den Übertragungseinrichtungen reserviert und den Weg der Betriebsstrecke (WE) und der Ersatzstrecke (PE) festlegt.

10. Verfahren nach einem der vorstehenden Ansprüche,
**dadurch gekennzeichnet,**
daß die Vermittlungseinrichtungen (W, E) als Crossconnect-Schalteinrichtungen ausgebildet sind.
